(19) Europäisches Patentamt / European Patent Office / Office européen des brevets

(11) **EP 2 179 498 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(21) Anmeldenummer: **08787074.7**

(22) Anmeldetag: **09.08.2008**

(51) Int Cl.:
*H02P 9/00* (2006.01)   *H02P 21/00* (2006.01)
*F03D 7/04* (2006.01)

(86) Internationale Anmeldenummer:
**PCT/EP2008/060495**

(87) Internationale Veröffentlichungsnummer:
**WO 2009/024489 (26.02.2009 Gazette 2009/09)**

(54) **VERFAHREN UND VORRICHTUNG ZUR KOMPENSATION VON SCHWINGUNGSEFFEKTEN BEI NETZUNSYMMETRIE BEI EINER DOPPELTGESPEISTEN ASYNCHRONMASCHINE**

METHOD AND APPARATUS FOR COMPENSATION OF VIBRATION EFFECTS OF NETWORK ASYMMETRY IN A DOUBLY-FED ASYNCHRONOUS MACHINE

PROCÉDÉ ET DISPOSITIF POUR COMPENSER DES EFFETS D'OSCILLATION EN CAS D'ASYMÉTRIE DU RÉSEAU POUR UNE MACHINE ASYNCHRONE À DOUBLE ALIMENTATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.08.2007 DE 102007039697**

(43) Veröffentlichungstag der Anmeldung:
**28.04.2010 Patentblatt 2010/17**

(73) Patentinhaber: **Woodward Kempen GmbH 47906 Kempen (DE)**

(72) Erfinder:
• **ENGELHARDT, Stephan**
  **47665 Sonsbeck (DE)**
• **WREDE, Holger**
  **45665 Recklinghausen (DE)**
• **GENIUSZ, Andrzej**
  **45473 Mülheim An Der Ruhr (DE)**

(74) Vertreter: **Bonsmann, Joachim Bernhard et al Bonsmann & Bonsmann Patentanwälte Kaldenkirchener Strasse 35 a 41063 Mönchengladbach (DE)**

(56) Entgegenhaltungen:
**US-A1- 2003 218 441     US-A1- 2004 128 105**

• **ZHOU Y ET AL: "Control of DFIG under Unsymmetrical Voltage Dip" PESC 2007,, 17. Juni 2007 (2007-06-17), Seiten 933-938, XP002497304**
• **BREKKEN T K A ET AL: "Control of a Doubly Fed Induction Wind Generator Under Unbalanced Grid Voltage Conditions" IEEE TRANSACTIONS ON ENERGY CONVERSION,, Bd. 22, Nr. 1, 1. März 2007 (2007-03-01), Seiten 129-135, XP002497305**

EP 2 179 498 B1

**Beschreibung**

Die vorliegende Erfindung betrifft Verfahren gemäß den Oberbegriffen der Patentansprüche 1 und 2 sowie eine Vorrichtung zur Durchführung des Verfahrens gemäß dem Oberbegriff des Patentanspruches 7.

Doppeltgespeiste Asynchronmaschinen werden vorzugsweise in drehzahlvariablen Systemen, beispielsweise in Windkraftanlagen hoher Leistung, als Wellengenerator oder in Verbindung mit Schwungmassenspeichern und unterbrechungsfreien Stromversorgungen eingesetzt. Im Allgemeinen ist bei derartigen Anlagen der Stator der Asynchronmaschine mit dem Netz und der Rotor über Schleifringe mit einem Umrichter verbunden. Mit einem derartigen Umrichter kann ein Sollwert einer elektrischen Größe in den Rotor eingeprägt werden. In der Regel gibt es in modernen Anlagen einen maschinenseitigen Umrichter und einen netzseitigen Umrichter, die über einen Zwischenkreis miteinander verbunden sind. Der Vorteil der doppeltgespeisten Asynchronmaschine gegenüber vergleichbaren Systemen besteht in der reduzierten Bauleistung des Umrichters gegenüber der Gesamtleistung, die in ein Netz gespeist werden kann. Dadurch hat ein System mit einer doppeltgespeisten Asynchronmaschine einen vergleichsweise hohen Wirkungsgrad.

Im Zuge der zunehmenden Anzahl von Windkraftanlagen und der damit verbundenen immer höher werdenden Anforderungen der Netzbetreiber ist das Verhalten der doppeltgespeisten Asynchronmaschine bei Netzunsymmetrien zunehmend von Interesse. Da bei einer doppeltgespeisten Asynchronmaschine der Stator der Maschine direkt mit dem Netz verbunden ist, führen Netzunsymmetrien zu unsymmetrischen Statorfeldverteilungen, was zu unerwünschten Rückwirkungen auf das Rotorfeld und die Umrichter führt.

Bei unsymmetrischer Netzspannung treten insbesondere Harmonische, insbesondere Oberschwingungen mit doppelter Netzfrequenz, auf, die sich für die Mechanik nachteilig auswirken, da die Oberschwingungen entsprechende Drehmomentschwingungen erzeugen, die insbesondere das Getriebe stark belasten.

Neben den nachfolgend primär diskutierten Oberschwingungen mit der doppelten Netzfrequenz können - in der Regel mit geringerer Amplitude - auch unerwünschte höhere Harmonische auftreten; dabei handelt es sich primär um die sechste und die zwölfte Harmonische.

Aus ZHOU Y ET AL: "Control of DFIG under Unsymmetrical Voltage Dip" PESC 2007 vom 17. Juni 2007, Seiten 933-938, XP002497304 ist ein Verfahren zur Kompensation von Rotordrehmomentoberschwingungen, insbesondere bei einer doppeltgespeisten Asynchronmaschine bekannt, bei dem bei Auftreten von Netzasymmetrien die Momentanleistung betrachtet und rechnerisch in eine Mit- und eine Gegensystemkomponente zerlegt wird. Diese Komponenten werden dann jeweils separaten Regelgliedern zugeführt, deren Ausgangswerte additiv zur Regelung der Rotorspannung überlagert werden, wodurch den Rotordrehmomentoberschwingungen entgegengewirkt werden soll.

Aus BREKKEN T K A ET AL: "Control of a Doubly Fed Induction Wind Generator Under Unbalanced Grid Voltage Conditions" IEEE TRANSACTIONS ON ENERGY CONVERSION, Bd. 22, Nr. 1 vom 1. März 2007, Seiten 129-135, XP002497305, ist ein Regelungsverfahren für eine doppeltgespeiste Asynchronmaschine bei Netzasymmetrien bekannt.

Die Aufgabe der vorliegenden Erfindung besteht darin, die durch unsymmetrische Netzspannung verursachten Harmonischen zu erfassen und diesen unmittelbar regelungstechnisch entgegenzuwirken.

Die Lösung der vorgenannten Aufgabe erfolgt mittels Verfahren mit den Merkmalen der unabhängigen Patentanspruchs 1 bzw. 2 sowie mittels einer entsprechend ausgebildeten Regeleinheit gemäß den Merkmalen des Patentanspruchs 7.

Vorteilhafte Ausgestaltungen der Erfindung sind aus den abhängigen Patentansprüchen ersichtlich.

Im Rahmen der Erfindung ist vorgesehen, dass jeweils mindestens eine aktuelle Maschinengröße gemessen und/oder aus anderen Maschinenmessgrößen abgeleitet wird und die mindestens eine diese Maschinengrößen rechnerisch jeweils in eine Mit-, eine Gegensystemkomponente sowie optional eine DC-Komponente zerlegt wird.

Gemäß einer Ausführungsform der Erfindung (vgl. Schritt (c1) in Patentanspruch 1) sind für die Mitsystemkomponenten, die Gegensystemkomponenten und für die DC-Komponenten der mindestens einen Maschinengröße jeweils separate Regelglieder zur Regelung einer Stellgröße vorhanden, denen die jeweiligen Komponenten der Maschinengrößen als Eingangskomponenten zugeführt werden und deren Ausgangswerte additiv überlagert werden, wobei die Regelglieder dahingehend ausgebildet sind, die Stellgröße derart zu regeln, dass den Drehmomentpendelungen entgegengewirkt wird.

Erfindungsgemäß kann eine Regelung der Rotorspannung einer doppeltgespeisten Asynchronmaschine dahingehend erfolgen, dass die modalen Pendelmomente entweder unter Berücksichtigung der DC-Komponenten oder unter Vernachlässigung der DC-Komponenten eliminiert werden (vgl. die Fälle (c1 i) bzw. (c1 ii) gemäß Patentanspruch 1).

Bei Berücksichtigung der DC-Komponenten der Pendelmomente ist das resultierende Drehmoment notwendigerweise null und eine zusätzliche Drehmomentregelung ist nicht möglich.

Bei Vernachlässigung der DC-Komponenten ist es hingegen möglich, einen anpassbaren Phasenversatz zwischen Stator und Rotor einzuregeln, so dass das resultierende Drehmoment nicht notwendigerweise null ist und gleichzeitig noch eine Drehmomentregelung erfolgen kann.

In einer alternativen Ausführungsform der Erfindung gemäß Patentanspruch 2 ist wenigstens ein Regelglied vorgesehen, dem das Kreuzprodukt aus Mitsystemgrößen bzw. -komponenten und Gegensystemgrößen bzw. -komponenten sowie das Kreuzprodukt aus Gegensystemgrößen bzw. -komponenten und Mitsystemgrößen bzw. -komponenten als Eingangsgröße zugeführt wird, wobei dieses Regelglied dahingehend ausgebildet ist, die Stellgröße derart zu regeln, dass Drehmomentpendelungen zweiter Ordnung entgegengewirkt wird.

Die Erfindung wird nachfolgend anhand der Figuren beispielhaft näher erläutert. Es zeigen:

Figur 1          eine schematische Ansicht einer doppeltgespeisten Asynchronmaschine mit der zugehörigen Steuer- und Leistungselektronik;

Figur 2          ein Ersatzschaltbild der doppeltgespeisten Asynchronmaschine;

Figuren 3a,b    High-Level-Diagramme zweier Ausführungsformen des erfindungsgemäßen Regelungsverfahrens;

Figur 4          ein Blockdiagramm eines Flussbeobachters;

Figur 5          ein Blockdiagramm mit einer schematischen Darstellung der Modalzerlegung;

Figur 6        ein Blockdiagramm der Flussregelung für die Gegensystemkomponenten;

Figur 7        ein Blockdiagramm einer Flussregelung für eine alternative Ausführungsform der Erfindung, bei der das negative Kreuzprodukt aus Statorflussmitsystem und Rotorflussgegensystem sowie das Kreuzprodukt aus Statorflussgegensystem und Rotorflussmitsystem hinsichtlich Betrag und Phasenlage möglichst auf gleiche Werte eingeregelt werden; und

Figur 8        ein Diagramm zur Gewinnung eines virtuellen Raumzeigers

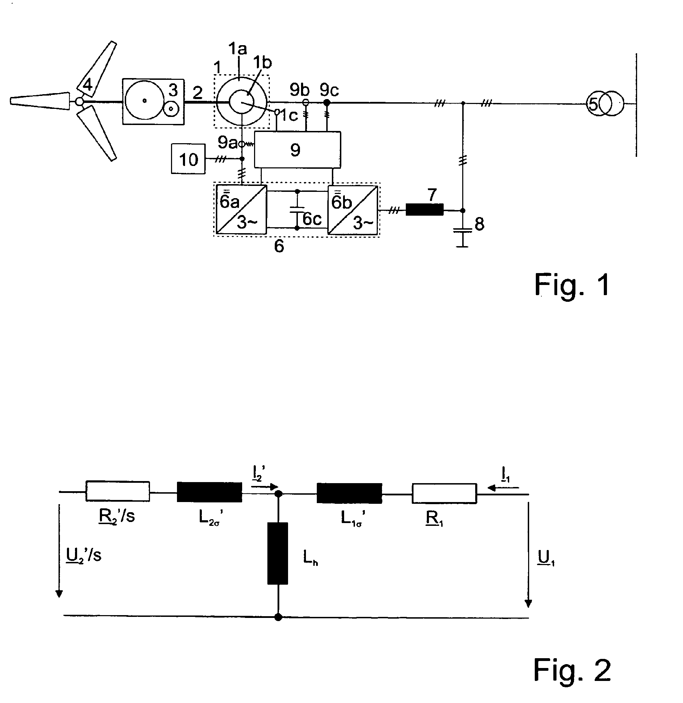

Figur 1 zeigt schematisch ein System mit einer doppeltgespeisten Asynchronmaschine 1. Die doppeltgespeiste Asynchronmaschine 1 weist einen Stator 1a und einen Rotor 1b auf. An der Maschine ist außerdem ein Lagegeber 1c angebracht. Der Rotor der Asynchronmaschine ist mechanisch über eine Welle 2 und ein Getriebe 3 mit einem Antrieb gekoppelt. Der in Figur 1 gezeigte Antrieb stellt die Rotorblätter 4 einer Windkraftanlage dar. Der Stator 1 a ist über eine Netztransformator 5 mit den Netz verbunden. Der Rotor 1b ist elektrisch mit einem Umrichter 6 und der Umrichter über eine Drossel 7 und ein Netzfilter 8 mit dem Netztransformator 5 verbunden. Der maschinenseitige Umrichter 6a und der netzseitige Umrichter 6b sind über einen Spannungszwischenkreis 6c miteinander gekoppelt. Der Umrichter wird über eine Steuereinheit 9 angesteuert.

Figur 1 zeigt außerdem die Messstellen für den Rotorstrom 9a, den Statorstrom 9b und die Statorspannung 9c. Die Messwerte werden an die Steuereinheit 9 übergeben. Der Steuereinheit wird ebenfalls die Rotorlage vom Lagegeber 1c zur Verfügung gestellt. Zum Schutz des Umrichters gegen Überlastungen kann zwischen maschinenseitigem Umrichter 6a und Rotor 1b eine sog. Crowbar 10 angeordnet sein.

Modale Beschreibung der Asynchronmaschine:

Für die nachfolgende regelungstechnische Beschreibung soll das aus der Literatur bekannte allgemeine lineare Ersatzschaltbild der Asynchronmaschine gemäß Figur 2 mit den dort beschriebenen Annahmen und Vereinfachungen gelten. Aufgrund der vorausgesetzten Linearität gilt das Superpositionsprinzip und es lassen sich nicht symmetrische Vorgänge mit Hilfe der Modalen Transformation (vgl. DIN 13321, Komponenten in Drehstrommetzen) anschaulicher darstellen.

Des Weiteren gilt das Maschinenmodell für beliebige Statorfrequenzen; somit lassen sich auch multifrequente Systeme anhand des Superpositionsprinzips einfach beschreiben, z.B.

$$\underline{U}_1 = \underline{U}_{1p} + \underline{U}_{1n} + \underline{U}_{1dc}$$

$$\underline{U}_{1p} : Mitsystemkomponente$$

$$\underline{U}_{1n} : Gegensystemkomponente \qquad\qquad (1)$$

$$\underline{U}_{1dc} : DC - Systemkomponente$$

Für den Reglerentwurf bedeutet dies, dass auf die modalen Komponenten der jeweiligen regelungstechnisch interessanten Frequenzen ein paralleler Regelkreis zum Einsatz kommen kann. Die Stellgrößen der parallelen Regelkreise werden dann zu einem Summenstellsignal aufaddiert.

Das Ausführungsbeispiel beschreibt eine Drehmomentregelung, die bei netzfrequenter Asymmetrie und Auftreten eines Gleichstromgliedes infolge transienter Netzspannungsänderungen Pendelmomente unterdrückt.

Gemäß dem Reglerentwurf sind drei parallele Regelkreise vorgesehen:

I. Drehmoment-Regelkreis für netzfrequente Mitsystemkomponenten
II. Drehmoment-Regelkreis für netzfrequente Gegensystemkomponenten
III. Drehmoment-Regelkreis für Gleichstromkomponenten

Für alle Regelkreise gilt das in Figur 1 dargestellte Ersatzschaltbild mit den folgenden Definitionen für die Variable Schlupf ("s")

$$s_p = \frac{\omega_{Netz} - p \cdot \Omega_{mech}}{\omega_{Netz}} \qquad\qquad (2)$$

$$s_n = \frac{\omega_{Netz} + p \cdot \Omega_{mech}}{\omega_{Netz}} = 2 - s_p \qquad\qquad (3)$$

$$s_{dc} = \frac{0 + p \cdot \Omega_{mech}}{\omega_{Netz}} = 1 - s_p \qquad\qquad (4)$$

mit
$S_p$ : SchlupfMitsystem
$S_n$ : Schlupf Gegenystem
$S_{dc}$ : Schlupf DC - Komponente
$\omega_N$ : Netzkreisfrequenz
$p$ : Polpaarzahl
$\Omega_{mech}$ : mechanische Drehkreisfrequenz

Eine sehr wichtige Eigenschaft der Maschine lässt sich bereits aus diesen Gleichungen ableiten, wenn man die Spannungsabfälle an den Längsimpedanzen vernachlässigt:

$$U_{2p}' \approx s_p U_{1p}$$

$$f_{2p} = s_p f_1 = s_p f_{Netz}$$

$$U_{2n}' \approx (2 - s_p) U_{1n}$$

$$f_{2n} = s_n f_1 = (2 - s_p) f_{Netz} \tag{5a-c}$$

$$U_{2dc}' \approx (1 - s_p) U_{1dc}$$

$$f_{2dc} = s_{dc} f_1 = (1 - s_p) f_{Netz}$$

Die Rotorfrequenz zur Regelung der Gegensystem- und DC-Komponenten ist wesentlich höher als die Rotorfrequenz zur Regelung der Mitsystemkomponente. Somit ist auch die erforderliche Regler- bzw. Rotorspannung im Gegensystem und im DC-System zur Kompensation der zugehörigen modalen Komponente der Statorspannung bedeutend höher als im Mitsystem für den üblichen Arbeitsbereich von $-0.33 < S_p < 0.33$.

Eine besondere Einschränkung des Systems liegt in der Begrenzung der Stellspannung auf der Rotorseite durch die maximal zulässige Zwischenkreisspannung.

Dies erfordert beim Auftreten höherer modaler Komponenten in dem Gegen- oder DC-System eine anteilsmäßige Verteilung des Stellsignals auf die zu regelnden Komponenten.

Bestimmung des Drehmoments:

Die allgemeine Gleichung für das Luftspaltmoment der Asynchronmaschine ist:

$$M = 3 p L_{1h} I_1 I_2' \sin \gamma = -3 p L_{1h} (\underline{I}_1 \times \underline{I}_2') \vec{e}_z$$

$$\sin \gamma = \cos \angle (j \underline{I}_2'; \underline{I}_1) \tag{6}$$

$\vec{e}_z$ : Einheitsvektor senkrecht zur Raumzeigerebene

Alternativ lässt sich die Gleichung umformen zu:

$$M = -3 p L_{1h} (\underline{I}_1 \times \underline{I}_2') \vec{e}_z = -3 p \frac{L_{1h}}{L_1 L_2 - L_h^2} (\underline{\psi}_1 \times \underline{\psi}_2') \vec{e}_z \ mit$$

$$\underline{\psi}_1 = L_1 \underline{I}_1 + L_h \underline{I}_2' \tag{7a-c}$$

$$\underline{\psi}_2' = L_h \underline{I}_1 + L_2 \underline{I}_2'$$

Dies bedeutet, dass kein Drehmoment auftritt, wenn Stator und Rotorfluss in Phase liegen, da dann das Vektorprodukt "0" ist.

Das Vektorprodukt $(\underline{\psi}_1 \times \underline{\psi}_2')$ ergibt sich mit der modalen Zerlegung entsprechend (1) zu:

$$\left(\underline{\psi}_1 \times \underline{\psi}_2{}'\right) = \left(\left(\underline{\psi}_{1p} + \underline{\psi}_{1n} + \underline{\psi}_{1dc}\right) \times \left(\underline{\psi}_{2p}{}' + \underline{\psi}_{2n}{}' + \underline{\psi}_{2dc}{}'\right)\right)$$

$$= \underline{\psi}_{1p} \times \underline{\psi}_{2p}{}' + \underline{\psi}_{1n} \times \underline{\psi}_{2n}{}' + \underline{\psi}_{1dc} \times \underline{\psi}_{2dc}{}'$$

$$+ \underline{\psi}_{1p} \times \underline{\psi}_{2dc}{}' + \underline{\psi}_{1dc} \times \underline{\psi}_{2p}{}' \qquad (8)$$

$$+ \underline{\psi}_{1n} \times \underline{\psi}_{2dc}{}' + \underline{\psi}_{1dc} \times \underline{\psi}_{2n}{}'$$

$$+ \underline{\psi}_{1p} \times \underline{\psi}_{2n}{}' + \underline{\psi}_{1n} \times \underline{\psi}_{2p}{}'$$

Die ersten drei Produkte der Zerlegung bilden im eingeschwungenen Zustand ein konstantes Drehmoment, die folgenden vier Produkte mit den DC-Komponenten besitzen Netzfrequenz; die letzten beiden erzeugen ein Drehmoment doppelter Netzfrequenz.

Die trivialste Methode, die nicht konstanten Drehmomente zu unterdrücken, ist den Rotorfluss auf "0" zu regeln, hierdurch wird jedoch das gesamte Moment auf "0" geregelt und die Maschine in einen stark untererregten Betrieb gefahren. Diese hohe Blindleistungsaufnahme ist in der Regel unerwünscht oder untersagt.

Eine netzfreundlichere Methode ist das Auslöschen der zueinander komplementären Produkte der modalen Komponenten:

$$\underline{\psi}_{1p} \times \underline{\psi}_{2dc}{}' + \underline{\psi}_{1dc} \times \underline{\psi}_{2p}{}' \overset{!}{=} 0$$

$$\underline{\psi}_{1n} \times \underline{\psi}_{2dc}{}' + \underline{\psi}_{1dc} \times \underline{\psi}_{2n}{}' \overset{!}{=} 0 \qquad (9a\text{-}c)$$

$$\underline{\psi}_{1p} \times \underline{\psi}_{2n}{}' + \underline{\psi}_{1n} \times \underline{\psi}_{2p}{}' \overset{!}{=} 0$$

Diese Gleichungen lassen sich umstellen zu:

$$\underline{\psi}_{1p} \times \underline{\psi}_{2dc}{}' \overset{!}{=} \underline{\psi}_{2p}{}' \times \underline{\psi}_{1dc}$$

$$\underline{\psi}_{1n} \times \underline{\psi}_{2dc}{}' \overset{!}{=} \underline{\psi}_{2n}{}' \times \underline{\psi}_{1dc} \qquad (10a\text{-}c)$$

$$\underline{\psi}_{1p} \times \underline{\psi}_{2n}{}' \overset{!}{=} \underline{\psi}_{2p}{}' \times \underline{\psi}_{1n}$$

Diese Bedingungen können erfüllt werden mit:

$$\frac{\left|\underline{\psi}_{1p}\right|}{\left|\underline{\psi}_{2p}{}'\right|} \overset{!}{=} \frac{\left|\underline{\psi}_{1dc}\right|}{\left|\underline{\psi}_{2dc}{}'\right|} \qquad (11a)$$

$$\angle \underline{\psi}_{2p}{}' = \angle \underline{\psi}_{1p} + \phi_0 \qquad (11b)$$

$$\angle \underline{\psi}_{2dc}{}' = \angle \underline{\psi}_{1dc} - \phi_0 \qquad (11c)$$

$$\frac{\left|\underline{\psi}_{1n}\right|}{\left|\underline{\psi}_{2n}{}'\right|} \overset{!}{=} \frac{\left|\underline{\psi}_{2dc}\right|}{\left|\underline{\psi}_{1dc}{}'\right|} \tag{11d}$$

$$\angle\underline{\psi}_{2n}{}' = \angle\underline{\psi}_{1n} + \phi_0 \tag{11e}$$

$$\angle\underline{\psi}_{2dc}{}' = \angle\underline{\psi}_{1dc} - \phi_0 \tag{11f}$$

$$\frac{\left|\underline{\psi}_{1p}\right|}{\left|\underline{\psi}_{2p}{}'\right|} \overset{!}{=} \frac{\left|\underline{\psi}_{1n}\right|}{\left|\underline{\psi}_{2n}{}'\right|} \tag{11g}$$

$$\angle\underline{\psi}_{2p}{}' = \angle\underline{\psi}_{1p} + \phi_0 \tag{11h}$$

$$\angle\underline{\psi}_{2n}{}' = \angle\underline{\psi}_{1n} - \phi_0 \tag{11i}$$

$\phi_0$ : konstanter Winkel

Folgende zwei Fälle müssen unterschieden werden:

a) Unmittelbar nach einer Spannungsänderung sind DC-Komponenten vorhanden, alle Pendelmomente sollen unterdrückt werden;

b) Unsymmetrie nach Abklingen der DC-Komponenten oder Vernachlässigung der Pendelmomente aufgrund der DC-Komponenten.

Lösung zu a):

Die Gleichungen sind nur gleichzeitig erfüllbar, wenn gilt:

$$\frac{\left|\underline{\psi}_{1p}\right|}{\left|\underline{\psi}_{2p}{}'\right|} = \frac{\left|\underline{\psi}_{1n}\right|}{\left|\underline{\psi}_{2n}{}'\right|} = \frac{\left|\underline{\psi}_{1dc}\right|}{\left|\underline{\psi}_{2dc}{}'\right|}$$

$$\phi_0 = 0$$

$$\angle\underline{\psi}_{2p}{}' = \angle\underline{\psi}_{1p}$$

$$\angle\underline{\psi}_{2n}{}' = \angle\underline{\psi}_{1n}$$

$$\angle\underline{\psi}_{2dc}{}' = \angle\underline{\psi}_{1dc}$$

$$\tag{12a-e}$$

Mit dieser Lösung wird in jedem Fall auch das konstante Moment zu "0" erzwungen.

Begrenzung der Rotorspannung:

Die Verhältnisgrößen $\dfrac{\left|\underline{\psi}_{1p}\right|}{\left|\underline{\psi}_{2p}'\right|}, \dfrac{\left|\underline{\psi}_{1n}\right|}{\left|\underline{\psi}_{2n}'\right|}, \dfrac{\left|\underline{\psi}_{1dc}\right|}{\left|\underline{\psi}_{2dc}'\right|}$ lassen sich unter Berücksichtigung der maximalen Stellgröße der Rotorspannung bestimmen.

Der Betrag der Summenrotorspannung der modalen Komponenten darf den Maximalbetrag nicht überschreiten:

$$\left|\underline{U}_2\right| = \left|\underline{U}_{2p} + \underline{U}_{2n} + \underline{U}_{2dc}\right| \leq U_{2.\max} \tag{13}$$

Eine vereinfachte und ausreichende Abschätzung der Komponenten lässt sich anhand der quasistationären Rotorspannungen durchführen, die durch die vom Netz eingeprägten Statorfluss-Modalkomponenten induziert werden, unter Berücksichtigung von (5) und Vernachlässigung der Streuinduktivitäten:

$$\frac{\left|\underline{\psi}_{1p}\right|}{\left|\underline{\psi}_{2p,ideal}'\right|} = \frac{\left|\underline{\psi}_{1n}\right|}{\left|\underline{\psi}_{2n,ideal}'\right|} = \frac{\left|\underline{\psi}_{1dc}\right|}{\left|\underline{\psi}_{2dc,ideal}'\right|} \overset{!}{=} 1 \tag{14}$$

Damit ergibt sich die erforderliche Stellgröße zu:

$$\left|\underline{U}_{2p,ideal}\right| \approx 2\pi f_{2p}\left|\psi_{2p,ideal}'\right| = 2\pi s_p f_{Netz}\left|\psi_{1p}\right|$$

$$\left|\underline{U}_{2n,ideal}\right| \approx 2\pi f_{2n}\left|\psi_{2n,ideal}'\right| = 2\pi (2-s_p) f_{Netz}\left|\psi_{1n}\right|$$

$$\left|\underline{U}_{2dc,ideal}\right| \approx 2\pi f_{2dc}\left|\psi_{2dc,ideal}'\right| = 2\pi (1-s_p) f_{Netz}\left|\psi_{1dc}\right| \tag{15a-d}$$

$$\left|\underline{U}_{2,ideal}\right| = \left|\underline{U}_{2p,ideal}\right| + \left|\underline{U}_{2n,ideal}\right| + \left|\underline{U}_{2dc,ideal}\right|$$

Falls diese Spannung größer ist als die zur Verfügung stehende, muss eine Reduktion der Komponenten erfolgen. Der Reduktionsfaktor ergibt sich zu:

$$k_{red} = \frac{U_{2.\max}}{\left|\underline{U}_{2,ideal}\right|} \tag{16}$$

Daraus berechnen sich nun die Flussverhältnisse gemäß (12a) zu:

$$\frac{\left|\underline{\psi}_{1p}\right|}{\left|\underline{\psi}_{2p}'\right|} = \frac{\left|\underline{\psi}_{1n}\right|}{\left|\underline{\psi}_{2n}'\right|} = \frac{\left|\underline{\psi}_{1dc}\right|}{\left|\underline{\psi}_{2dc}'\right|} = \frac{1}{k_{red}} \tag{17}$$

Hiermit sind Betrag, Frequenz und Phasenlage der einzustellenden Rotorflusskomponenten eindeutig bestimmt und können hierauf basierend mit einem modalen Rotorflussregler eingestellt werden.

Lösung zu b):

$$\frac{\left|\underline{\psi}_{1p}\right|}{\left|\underline{\psi}_{2p}'\right|} = \frac{\left|\underline{\psi}_{1n}\right|}{\left|\underline{\psi}_{2n}'\right|}$$

$$\angle\underline{\psi}_{2p}' = \angle\underline{\psi}_{1p} + \phi_0 \tag{18a-c}$$

$$\angle\underline{\psi}_{2n}' = \angle\underline{\psi}_{1n} - \phi_0$$

Mit Hilfe des Versatzwinkels $\phi_0$ kann ein konkretes Drehmoment eingestellt werden, so dass eine Drehmomentregelung möglich bleibt. Eventuelle Pendelmomente infolge von DC-Komponenten werden nicht unterdrückt.

Je nach Präferenz kann Lösung a) oder b) bevorzugt werden; insbesondere kann unmittelbar nach Auftreten der Asymmetrie gemäß Lösung a) und später nach Abklingen der DC-Komponente gemäß Lösung b) geregelt werden.

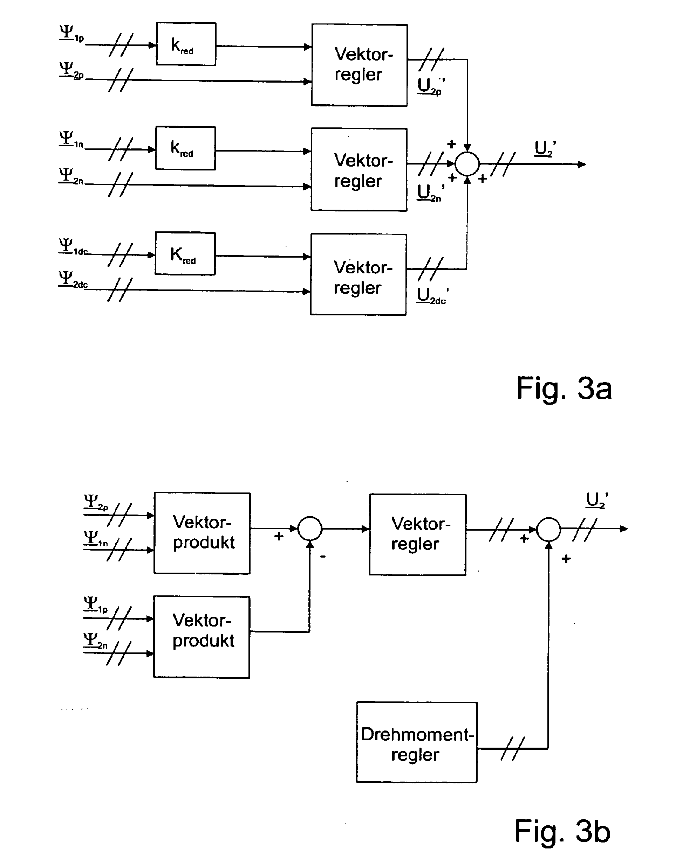

Anhand der Übersichtsdarstellungen der Figuren 3a und 3b sollen erfindungsgemäße modale Rotorflussregler zunächst erläutert werden:

Bei der in Figur 3a dargestellten Regelvariante (entsprechend dem vorstehend diskutierten Fall (a)) werden die Mitsystem-, Gegensystem- und DC-Raumzeigerkomponenten von Stator- und Rotorfluss so geregelt, dass sich die jeweiligen Komponenten jeweils betragsmäßig nur um den Faktor $k_{red}$ unterscheiden, in der Phasenlage aber übereinanderliegen. Der Faktor $k_{red}$ bestimmt sich aus der maximal verfügbaren Stellgröße der Rotorspannung. Die drei Vektorregler arbeiten parallel, wobei die Ausgangsgrößen aufsummiert und dann als Rotorspannung eingeprägt werden. Dieser Fall erzwingt gemäß der vorstehenden Herleitung, dass das Luftspaltmoment stets null ist. Eine parallele Drehmomentregelung der Asynchronmaschine ist daher in diesem Falle nicht möglich.

Bei der in Figur 3b dargestellten Regelvariante entsprechend dem vorstehend diskutierten Fall (b) werden nur Mit- und Gegensystem der Grundschwingung von Rotor- und Statorfluss betrachtet, wobei alle in Figur 3b gezeigten Flusskomponenten in Raumzeigerdarstellung vorliegen sollen. Wie vorstehend gezeigt, ist damit der Winkel zwischen Rotor- und Statorfluss und somit auch das mittlere Luftspaltmoment des Generators frei einstellbar.

Die zwei Flusskomponenten $\psi_{2p}$ und $\psi_{1p}$ werden durch die primäre Regelung vorgegeben, die Größe $\psi_{1n}$ ist durch das Einspeisungsnetz quasi eingeprägt. Der zur primären Regelung parallel arbeitende Vektorregler gemäß Figur 3b prägt der Rotorspannung eine zusätzliche Größe in der Form auf, dass die Vektorprodukte $\underline{\psi}_{2p} \times \underline{\psi}_{1n}$ und $\underline{\psi}_{1p} \times \underline{\psi}_{2n}$ gleich groß sind, zumindest insoweit, als es der Stellbereich des Umrichters zulässt. Damit wird das Pendelluftspaltmoment doppelter Netzfrequenz eliminiert.

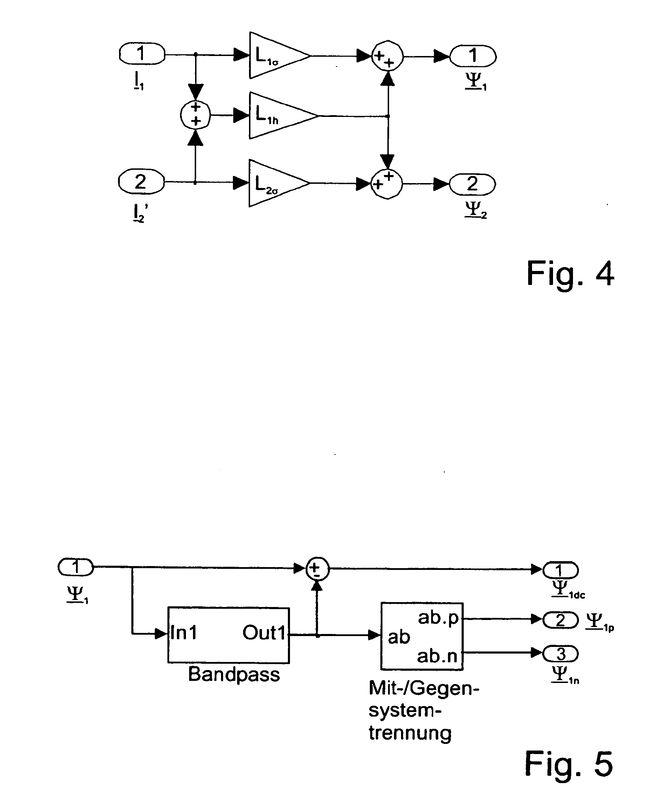

Die Bestimmung der modalen Komponenten für die Pendelmomentunterdrückung wird im nachfolgenden Abschnitt im Einzelnen anhand der Figuren 4 bis 8 beschrieben.

Flussbeobachter:

Der Flussbeobachter besteht aus dem in Figur 4 dargestellten Strommodell und arbeitet nach folgenden Gleichungen:

$$\underline{\psi}_1 = L_h(\underline{I}_1 + \underline{I}_2') + L_{1\sigma}\underline{I}_1$$

$$\underline{\psi}_2 = L_h(\underline{I}_1 + \underline{I}_2') + L_{2\sigma}\underline{I}_2' \tag{19, 20}$$

Die vorstehenden Gleichungen zur Bestimmung des Flusses sind in dem in Figur 4 gezeigten Blockdiagramm implementiert.

In einer weiteren Ausführung kann alternativ auch ein Spannungsmodell der doppeltgespeisten Asynchronmaschine oder eine Kombination aus beiden Modellen eingesetzt werden.

Die Eingangsgrößen in Figur 4 sind der gemessene Statorstrom $\underline{I}_1$ und der in ein statorbezogenes Koordinatensystem transformierte und mit dem Übersetzungsverhältnis (Rotor/Stator) multiplizierte, gemessene Rotorstrom $\underline{I}_2'$. Diese Größen werden in vektorieller Form (im $\alpha/\beta$-System) verarbeitet.

Modalkomponenten der Flüsse:

Die Bestimmung der Modalkomponenten erfolgt wie in Figur 5 schematisch dargestellt. Unter der vorstehend gemachten Annahme, dass die Flüsse nur DC- und netzfrequente Anteile besitzen, wird zunächst der netzfrequente Anteil aus dem Gesamtraumzeiger des jeweiligen Flusses mit einem Bandpass herausgefiltert. Wird dieser Anteil vom Originalsignal abgezogen, steht der DC-Anteil fest.

Die netzfrequenten Anteile werden nun mit einem geeigneten Verfahren in Mitund Gegensystem zerlegt.

Derartige Verfahren sind z.B. in "Leistungsregelung von Windkraftanlagen mit doppeltgespeister Asynchronmaschine bei Netzunsymmetrie", S.M.-Engelhardt, H. Wrede, J. Kretschmann, VDI-Berichte Nr. 1963, 2006 beschrieben, wobei dieses Dokument bezüglich dieser Verfahren zum Gegenstand der vorliegenden Offenbarung gemacht wird. Insbesondere werden gemäß dem genannten Dokument - nachfolgend kurz skizzierte - Verfahren zur Trennung in Mit- und Gegensystem vorgeschlagen:

Gemäß einem ersten Verfahren erfolgt eine Filterung der Signale wie folgt: Da die Momentanwerte keine Trennung von Mit- und Gegensystem zulassen, ist zuerst der Raumzeiger mit einer bekannten Transformation auf das statorfeste $\alpha/\beta$-System zu generieren, in dem sich das Gegensystem als mathematisch negativ drehendes 50 (bzw. 60) Hz System darstellt. Um negativ und positiv drehende Systeme im Zeitbereich voneinander zu trennen, ist es notwendig, eine Frequenzverschiebung durchzuführen, da ein Filter grundsätzlich nicht dazu geeignet ist. Die Frequenzverschiebung ist bei einem Vektor sehr einfach durch eine Winkeltransformation durchführbar. Vorliegend wird eine Frequenzverschiebung um 50 (60) Hz negativ gewählt, da dann das Gegensystem zur Gleichgröße wird. Das Mitsystem bildet sich als 100 (120) Hz-Komponente aus. Dadurch kann zum einen ein Tiefpass zur Trennung der Signale genutzt werden, zum anderen bestehen an die Regelung keine besonderen Dynamikanforderungen. Es kann ein relativ langsamer Regler verwendet werden, um Seiteneffekte auf die Mitsystemregelung zu minimieren.

Die Frequenztransformation selbst ist mit einem relativ oberschwingungsfreien Winkel durchzuführen, um die Störeinkopplung zu minimieren. Ideal wäre eine feste Vorgabe der Transformationsfrequenz; damit wäre aber bei Netzfrequenzen ungleich 50 (60) Hz, die in Zukunft in schwächeren Netzen zu erwarten sind, das Gegensystem keine Gleichgröße mehr, sondern niederfrequent. Dies würde sich negativ auf die Forderung nach einer Entkopplung von Mit- und Gegensystemregelung auswirken, da Phasenlaufzeiten bei größeren Abweichungen von der Nennfrequenz zunehmend dominant werden und eine verminderte Stabilitätsgrenze zur Folge haben.

Ein guter Kompromiss ist die Generierung des Transformationswinkels aus dem Phasenwinkel des Netzspannungsraumzeigers mit anschließender Glättung über eine PLL mit niedriger Eckfrequenz.

Gemäß einem weiteren Verfahren kann die Filterung wie in H. Wrede. "Beiträge zur Erhöhung von Versorgungssicherheit und Spannungsqualität in der Übertragung und Verteilung elektrischer Energie durch leistungselektronische Betriebsmittel", Aachen, Shaker Verlag, 2004, Seite 45ff. vorgeschlagen erfolgen.

Zusätzlich zu der vorstehend beschriebenen Signalzerlegung erfolgt eine Berechnung des Reduktionsfaktors $k_{red}$ nach den Gleichungen (15) und (16).

Regelvariante gemäß Figur 3a:

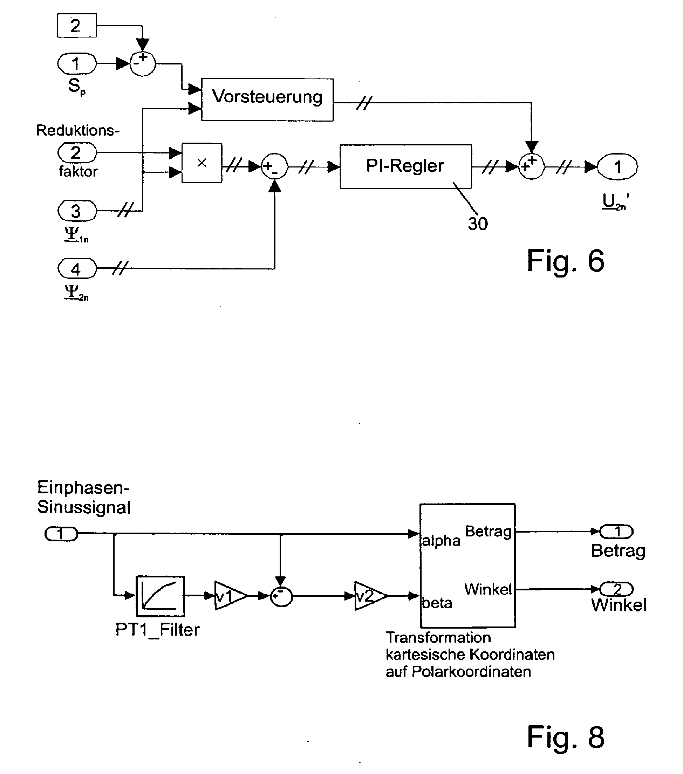

Für die eigentliche Regelung der Rotorspannung kommt jeweils ein Flussregler für die Mitsystem-, die Gegensystem- und die DC-Komponente zum Einsatz, der am Beispiel des Gegensystemreglers in Figur 6 beispielhaft als Betrags-/Winkelregler mit Vorsteuerung dargestellt ist. Andere Reglerformen sind ebenfalls möglich. Die Regler für das Mitsystem und die DC-Komponenten sind bevorzugt analog ausgestaltet.

Die Regelung erfolgt im Ausführungsbeispiel gemäß den Gleichungen (15)-(17).

Demnach berechnet sich die Rotorspannung zur Kompensation des reduzierten Anteils des Statorgegensystemflusses wie folgt:

$$\underline{U}_{2n}' = -j2\pi(2 - s_p).f_{Netz}k_{red}\underline{\psi}_{1n} \tag{21}$$

Dieser vorgesteuerte Wert wird durch den PI-Regler 30 hinsichtlich der Differenz der Flüsse so angepasst, dass die Rotorflusskomponente die vorstehend beschriebenen Werte annimmt.

Insbesondere werden der Vektor von $\underline{\psi}_2$ sowie der Vektor von $\underline{\psi}_1 k_{red}$ jeweils als Soll- bzw. Istwerte in den PI-Regler 30 eingespeist, womit eine Regelung auf einen Sollzustand gemäß Gleichung (17) hin erfolgt.

Die so erhaltene Rotorspannung zur Kompensation des reduzierten Anteils des Statorsystemgegenflusses wird schließlich über den rotorseitigen Umrichter 6 der Rotorspannung aufgeprägt.

Die übrigen Komponenten zur Kompensation des Statormitsystemflusses und der Statorfluss-DC-Komponenten werden analog ermittelt und additiv überlagert, wie in Figur 3a dargestellt.

Regelvariante gemäß Figur 3b:

Hinsichtlich einer ausführlichen Beschreibung zur Herleitung der Drehmomentkomponenten und dem benötigten Flussmodell wird auf die vorstehenden Ausführungen verwiesen.

Die drehmomentproportionalen Komponenten berechnen sich zu:

$$t_1 = \psi_{2p,alpha} \cdot \psi_{1n,beta} - \psi_{2p,beta} \cdot \psi_{1n,alpha}$$
$$t_2 = \psi_{1p,alpha} \cdot \psi_{2n,beta} - \psi_{1p,beta} \cdot \psi_{2n,alpha}$$

(22a, b);

diese sind Sinusgrößen doppelter Netzfrequenz.

Um diese beiden Größen in Betrag und Phasenlage in Übereinstimmung zu bringen, wird jeweils ein virtueller Raumzeiger sinngemäß zum Verfahren nach Lê generiert, vgl. Figur 8.

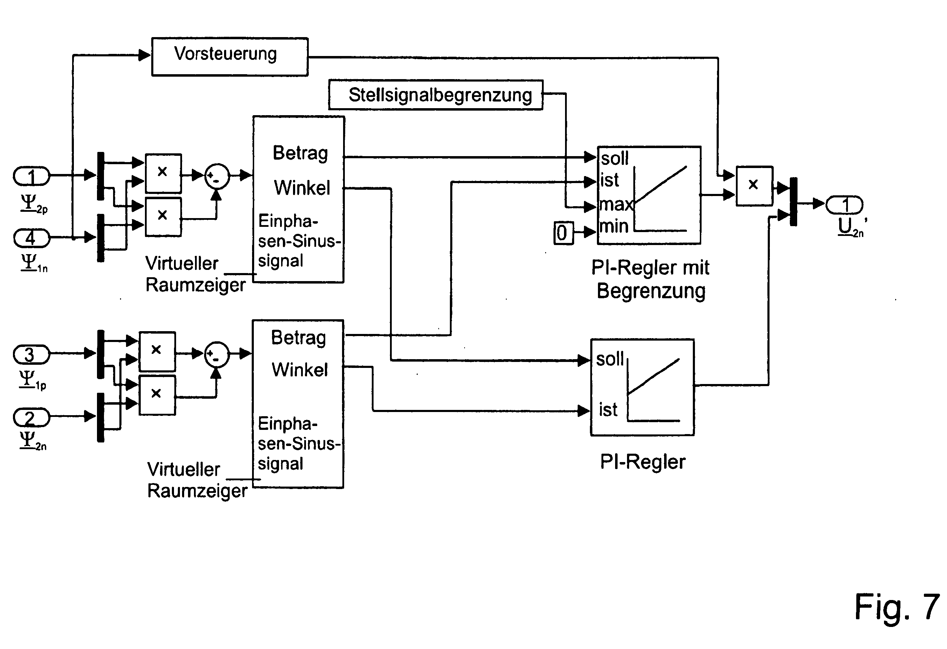

Die Betrags- und Winkeldifferenz wird dann mit zwei PI-Reglern eliminiert, vgl. die Darstellung in Figur 7.

Für ein schnelleres Einregelverhalten ist eine Vorsteuerung der Induktionsspannung aus dem Statorflussgegensystem sinnvoll. Diese Spannung muss dann nur noch in Betrag und Winkel durch die Regler korrigiert werden.

Entsprechend der vorstehenden Beschreibung ist aus Stabilitätsgründen und für eine Priorisierung der Mit- und Gegensystemregelung eine Stellsignalbegrenzung für den Regler erforderlich.

Auswahl der verschiedenen Regelmodi:

Die Regelung gemäß Fig. 3a wird vorzugsweise nach größeren Störungen im Versorgungsnetz aktiviert, wenn die Priorität der Regelung auf einer Begrenzung der maximalen Belastung des Triebstrangs des Systems liegt und größere Gleichstromanteile (DC-Komponenten) auftreten, die zu merklichen Drehmomentbelastungen führen. Eine Drehmomentregelung ist in diesen Fällen nicht unbedingt erforderlich.

Nach Abklingen der DC-Komponenten und im fehlerfreien Betrieb des Systems steht die Drehmomentregelung im Vordergrund, so dass die Regelung gemäß Fig. 3b aktiviert wird. Mit dieser Variante ist eine Drehmomentregelung mit gleichzeitiger Eliminierung bzw. Reduktion der Pendelmomente doppelter Netzfrequenz bei stationärer Netzunsymmetrie möglich.

**Patentansprüche**

1. Verfahren zur Kompensation von Rotordrehmomentoberschwingungen bei einer doppeltgespeisten Asynchronmaschine (1) mit einem über einen Umrichter (6) gespeisten Rotor (1 b), bei dem eine Rotordrehmomentregelung zur Unterdrückung von Pendelmomenten mittels einer Regelung der dem Rotor (1 b) zugeführten Spannung derart erfolgt, dass netzfrequente Schwingungen oder Harmonische höherer Ordnung im Kreuzprodukt zwischen dem vom Rotor erzeugten Flussvektor und dem vom Stator erzeugten Flussvektor möglichst weitgehend eliminiert werden, mit den Schritten:

   a) Berechnung eines aktuellen Statorflussvektors $\underline{\psi}_1$ und eines aktuellen Rotorflussvektors $\underline{\psi}_2'$ mittels eines Flussbeobachters auf der Basis von aktuellen Maschinenmessgrößen;
   b) Aufspaltung des Statorflussvektors $\underline{\psi}_1$ und des Rotorflussvektors $\underline{\psi}_2'$ jeweils in eine Mitsystemkomponente $\underline{\psi}_{1p}$ bzw. $\underline{\psi}_{2p}'$, eine Gegensystemkomponente $\underline{\psi}_{1n}$ bzw. $\underline{\psi}_{2n}'$ sowie optional eine DC-Komponente $\underline{\psi}_{1dc}$ bzw. $\underline{\psi}_{2dc}'$;
   c1) Regelung der Rotorspannung durch additive Überlagerung der Ausgangssignale von wenigstens zwei Reglern, wobei ein erster Regler die Mitsystemkomponenten $\underline{\psi}_{1p}$ und $\underline{\psi}_{2p}'$, ein zweiter Regler die Gegensystemkomponenten $\underline{\psi}_{1n}$ und $\underline{\psi}_{2n}'$ und ein optionaler dritter Regler die DC-Komponenten des Stator- und des Rotorflussvektors $\underline{\psi}_{1dc}$ bzw. $\underline{\psi}_{2dc}'$ als Eingangsgrößen erhält, wobei die Regelung derart erfolgt, dass
   i) entweder im Falle der Berücksichtigung der durch DC-Komponenten verursachten Pendelmomente folgende Beziehung zwischen den Stator- und Rotorflussvektoren mit Gesamtdrehmoment 0 eingeregelt wird:

$$\frac{\left|\underline{\psi}_{1p}\right|}{\left|\underline{\psi}_{2p}\right|'} = \frac{\left|\underline{\psi}_{1n}\right|}{\left|\underline{\psi}_{2n}\right|'} = \frac{\left|\underline{\psi}_{1dc}\right|}{\left|\underline{\psi}_{2dc}\right|'} = \frac{1}{k_{red}}$$

sowie

$$\angle\underline{\psi}_{2p}' = \angle\underline{\psi}_{1p} \text{ und } \angle\underline{\psi}_{2n}' = \angle\underline{\psi}_{1n} \text{ und } \angle\underline{\psi}_{2dc}' = \angle\underline{\psi}_{1dc}$$

oder

ii) dass für den Fall der Nicht-Berücksichtigung der durch DC-Komponenten verursachten Pendelmomente folgende Beziehung zwischen den Stator- und Rotorflussvektoren eingeregelt wird:

$$\frac{\left|\underline{\psi}_{1p}\right|}{\left|\underline{\psi}_{2p}\right|'} = \frac{\left|\underline{\psi}_{1n}\right|}{\left|\underline{\psi}_{2n}\right|'} = \frac{1}{k_{red}}$$

sowie

$$\angle\underline{\psi}_{2p}' = \angle\underline{\psi}_{1p} + \phi_0 \text{ und } \angle\underline{\psi}_{2n}' = \angle\underline{\psi}_{1n} - \phi_0$$

mit einem anpassbarem Phasenversatz $\phi_0$, durch den ein resultierendes Drehmoment eingestellt werden kann, wobei $k_{red}$ einen Reduktionsfaktor darstellt, der abhängig von der maximalen verfügbaren Stellgröße der Rotorspannung gewählt wird.

2. Verfahren zur Kompensation von Rotordrehmomentoberschwingungen bei einer doppeltgespeisten Asynchronmaschine (1) mit einem über einen Umrichter (6) gespeisten Rotor (1 b), bei dem
bei der doppeltgespeisten Asynchronmaschine (1) zur Rotordrehmomentregelung zur Unterdrückung von Pendelmomenten der doppelten Netzfrequenz eine Regelung der dem Rotor (1b) zugeführten Spannung wie folgt vorgenommen wird:

a) Berechnung eines aktuellen Statorflussvektors $\underline{\psi}_1$ und eines aktuellen Rotorflussvektors $\underline{\psi}_2'$ mittels eines Flussbeobachters auf der Basis von aktuellen Maschinenmessgrößen;
b) Aufspaltung des Statorflussvektors $\underline{\psi}_1$ und des Rotorflussvektors $\underline{\psi}_2'$, jeweils in eine Mitsystemkomponente $\underline{\psi}_{1p}$ bzw. $\underline{\psi}_{2p}'$ sowie eine Gegensystemkomponente $\underline{\psi}_{1n}$ bzw. $\underline{\psi}_{2n}'$;
c2) Regelung der Gegensystemkomponente des Rotorflusses derart, dass das negative Vektorprodukt aus der Mitsystemkomponente des Statorflusses mit der Gegensystemkomponente des Rotorflusses gleich dem Vektorprodukt aus der Gegensystemkomponente des Statorflusses mit der Mitsystemkomponente des Rotorflusses ist:

$$-\underline{\psi}_{1p} \times \underline{\psi}_{2n}' = \underline{\psi}_{1n} \times \underline{\psi}_{2p}'$$

3. Verfahren nach Anspruch 2,
**dadurch gekennzeichnet, dass**
die Regelung in Schritt c2) dadurch erfolgt, dass ein virtueller Raumzeiger generiert wird, dessen Betrags- und Phasendifferenz mittels zweier PI-Regler (30, 32) eliminiert wird, wobei die Regelung vorzugsweise einen Feed-Forward-Term aufweist.

4. Verfahren nach Anspruch 3,

**dadurch gekennzeichnet, dass**
die Regelung mit einer Stellsignalbegrenzung erfolgt, mit der das jeweils maximal noch verfügbare Stellsignal an dem rotorseitigen Konverter des Umrichters berücksichtigt wird.

5. Verfahren nach einem der Ansprüche 1 bis 4,
**dadurch gekennzeichnet, dass**
als aktuelle Maschinenmessgrößen in Schritt a) aktuelle Strom- und Spannungsmesswerte verwendet werden.

6. Verfahren nach einem der Ansprüche 1 bis 5,
**dadurch gekennzeichnet, dass**
weitere additiv überlagerte Regler zur Unterdrückung der Harmonischen höherer Ordnung, insbesondere der sechsten und der zwölften Harmonischen der Netzfrequenz, vorgesehen sind.

7. Regeleinheit zur Regelung einer fremderregten Drehstrom-Maschine, insbesondere einer doppeltgespeisten Asynchronmaschine, bei Auftreten von Netzasymmetrien, wobei die Maschine einen von einer Regeleinheit angesteuerten Frequenzumrichter aufweist, wobei die Regeleinheit den Umrichter im Hinblick auf eine vorgegebene Regelungsstrategie steuert,
**dadurch gekennzeichnet, dass**
die Regeleinheit Mittel aufweist die dahingehend ausgebildet ist, ein Verfahren nach einem der Ansprüche 1 bis 6 auszuführen.

**Claims**

1. A method for the compensation of rotor torque harmonics in the case of a double-fed asynchronous machine (1) having a rotor (1b) fed by way of a converter (6), in which rotor torque regulation for the suppression of pendulum moments is effected by means of regulation of the voltage fed to the rotor (1b) in such a way that network-frequency oscillations or higher-order harmonics in the cross-product between the flux vector produced by the rotor and the flux vector produced by the stator are eliminated as substantially as possible, comprising the steps:

   a) calculating a currently prevailing stator flux vector $\underline{\psi}_1$ and a currently prevailing rotor flux vector $\underline{\psi}_2$' by means of a flux observer on the basis of currently prevailing machine measurement values;
   b) dividing up the stator flux vector $\underline{\psi}_1$ und the rotor stator flux vector $\underline{\psi}_2$' respectively into a positive sequence system component $\underline{\psi}_{1p}$ and $\underline{\psi}_{2p}$' respectively, a negative sequence system component $\underline{\psi}_{1n}$ and $\underline{\psi}_{2n}$' respectively and optionally a DC-component $\underline{\psi}_{1dc}$ and $\underline{\psi}_{2dc}$';
   c1) regulating the rotor voltage by additive superpositioning of the output signals of at least two regulators, wherein a first regulator receives the positive sequence system components $\underline{\psi}_{1p}$ and $\underline{\psi}_{2p}$', a second regulator receives the negative sequence system components $\underline{\psi}_{1n}$ and $\underline{\psi}_{2n}$' and an optional third regulator receives the DC components of the stator and rotor flux vectors $\underline{\psi}_{1dc}$ and. $\underline{\psi}_{2dc}$' respectively as input values, wherein regulation is effected in such a way that
   i) either in the case of having regard to the pendulum moments caused by DC components the following relationship between the stator and rotor flux vectors is regulated, with a total torque 0

$$\frac{\left|\underline{\psi}_{1p}\right|}{\left|\underline{\psi}_{2p}'\right|} = \frac{\left|\underline{\psi}_{1n}\right|}{\left|\underline{\psi}_{2n}'\right|} = \frac{\left|\underline{\psi}_{1dc}\right|}{\left|\underline{\psi}_{2dc}'\right|} = \frac{1}{k_{red}}$$

and

$$\angle\underline{\psi}_{2p}' = \angle\underline{\psi}_{1p} \quad \text{and} \quad \angle\underline{\psi}_{2n}' = \angle\underline{\psi}_{1n} \quad \text{und} \quad \angle\underline{\psi}_{2dc}' = \angle\underline{\psi}_{1dc}$$

or

ii) for the situation of disregarding the pendulum moments caused by DC components the following relationship between the stator and rotor flux vectors is regulated:

$$\frac{\left|\underline{\psi}_{1p}\right|}{\left|\underline{\psi}_{2p}'\right|} = \frac{\left|\underline{\psi}_{1n}\right|}{\left|\underline{\psi}_{2n}'\right|} = \frac{1}{k_{red}}$$

and

$$\angle\underline{\psi}_{2p}' = \angle\underline{\psi}_{1p} + \phi_0 \text{ and } \angle\underline{\psi}_{2n}' = \angle\underline{\psi}_{1n} - \phi_0$$

with an adaptable phase displacement $\phi_0$, by which a resulting torque can be adjusted, wherein $k_{red}$ represents a reduction factor which is selected in dependence on the maximum available adjusting value of the rotor voltage.

2. A method for the compensation of rotor torque harmonics in the case of a double-fed asynchronous machine (1) having a rotor (1b) fed by way of a converter (6), in which in the case of the double-fed asynchronous machine (1) for rotor torque regulation for the suppression of pendulum moments of double the network frequency regulation of the voltage fed to the rotor (1b) is effected as follows:

a) calculating a currently prevailing stator flux vector $\underline{\psi}_1$ and a currently prevailing rotor flux vector $\underline{\psi}_2'$ by means of a flux observer on the basis of currently prevailing machine measurement values;
b) dividing up the stator flux vector $\underline{\psi}_1$ und the rotor stator flux vector $\underline{\psi}_2$ respectively into a positive sequence system component $\underline{\psi}_{1p}$ and $\underline{\psi}_{2p}$ respectively and a negative sequence system component $\underline{\psi}_{1n}$ and $\underline{\psi}_{2n}'$ respectively;
c2) regulating the negative sequence system component of the rotor flux in such a way that the negative vector product of the positive sequence system component of the stator flux with the negative sequence system component of the rotor flux is equal to the vector product of the negative sequence system component of the stator flux with the positive sequence system component of the rotor flux:

$$-\underline{\psi}_{1p} \times \underline{\psi}_{2n}' = \underline{\psi}_{1n} \times \underline{\psi}_{2p}'$$

3. A method according to claim 2 **characterised in that** regulation in step c2) is effected in such a way that a virtual spatial vector is generated, whose difference in respect of amount and phase is eliminated by means of two PI regulators (30, 32), regulation preferably having a feed-forward term.

4. A method according to claim 3 **characterised in that** regulation is effected with an adjusting signal limitation with which the respectively maximum still available adjusting signal at the rotor-side converter member of the converter is taken into consideration.

5. A method according to one of claims 1 to 4 **characterised in that** currently prevailing current and voltage measurement values are used as the currently prevailing machine measurement values in step a).

6. A method according to one of claims 1 to 5 **characterised in that** further additively superposed regulators are provided for suppressing the higher-order harmonics, in particular the sixth and the twelfth harmonics of the network frequency.

7. A regulating unit for regulating a separate-excited three-phase machine, in particular a double-fed asynchronous machine, in the event of occurrence of network asymmetries, wherein the machine has a frequency converter actuated by a regulating unit, the regulating unit controlling the converter in regard to a predetermined regulating strategy,
**characterised in that** the regulating unit has means adapted to carry out a method according to one of claims 1 to 6.

**Revendications**

1. Procédé de compensation des oscillations harmoniques du couple du rotor sur une machine asynchrone (1) à double alimentation comprenant un rotor (1b) alimenté par le biais d'un variateur (6), dans lequel une régulation du couple du rotor visant à atténuer les moments oscillants est réalisée au moyen d'une régulation de la tension acheminée au rotor (1b), de telle sorte que les oscillations à la fréquence du réseau ou les harmoniques d'ordre supérieur dans le produit vectoriel entre le vecteur de flux généré par le rotor et le vecteur de flux généré par le stator soient éliminées le plus possible, comprenant les étapes suivantes :

   a) calcul d'un vecteur de flux statorique $\underline{\psi}_1$ actuel et d'un vecteur de flux rotorique $\underline{\psi}_2'$ actuel au moyen d'un observateur de flux sur la base des grandeurs de mesure actuelles de la machine ;
   b) dédoublement du vecteur de flux statorique $\underline{\psi}_1$ et du vecteur de flux rotorique $\underline{\psi}_2'$ à chaque fois en une composante de système direct $\underline{\psi}_{1p}$ ou $\underline{\psi}_{2p}'$, en une composante de système inverse $\underline{\psi}_{1n}$ ou $\underline{\psi}_{2n}'$ et, en option, en une composante de courant continu $\underline{\psi}_{1dc}$ ou $\underline{\psi}_{2dc}'$ ;
   c1) régulation de la tension de rotor par superposition additive des signaux de sortie d'au moins trois régulateurs, un premier régulateur contenant les composantes de système direct $\underline{\psi}_{1p}$ et $\underline{\psi}_2'$, un deuxième régulateur les composantes de système inverse $\underline{\psi}_{1n}$ et $\underline{\psi}_{2n}'$ et un troisième régulateur optionnel les composantes de courant continu des vecteurs de flux statorique et rotorique $\underline{\psi}_{1dc}$ ou $\underline{\psi}_{2dc}'$ en tant que grandeurs d'entrée, la régulation étant effectuée de telle sorte que
   i) soit dans le cas de la prise en compte des moments oscillants provoqués par les composantes de courant continu, la relation suivante est régulée entre les vecteurs de flux statorique et rotorique avec un couple total égal à 0 :

$$\frac{\left|\underline{\psi}_{1p}\right|}{\left|\underline{\psi}_{2p}'\right|} = \frac{\left|\underline{\psi}_{1n}\right|}{\left|\underline{\psi}_{2n}'\right|} = \frac{\left|\underline{\psi}_{1dc}\right|}{\left|\underline{\psi}_{2dc}'\right|} = \frac{1}{k_{red}}$$

   ainsi que

$$\angle\underline{\psi}_{2p}' = \angle\underline{\psi}_{1p} \quad \text{et} \quad \angle\underline{\psi}_{2n}' = \angle\underline{\psi}_{1n} \quad \text{et} \quad \angle\underline{\psi}_{2dc}' = \angle\underline{\psi}_{1dc}$$

   soit
   ii) dans le cas de la non prise en compte des moments oscillants provoqués par les composantes de courant continu, la relation suivante est régulée entre les vecteurs de flux statorique et rotorique :

$$\frac{\left|\underline{\psi}_{1p}\right|}{\left|\underline{\psi}_{2p}'\right|} = \frac{\left|\underline{\psi}_{1n}\right|}{\left|\underline{\psi}_{2n}'\right|} = \frac{1}{k_{red}}$$

   ainsi que

$$\angle\underline{\psi}_{2p}' = \angle\underline{\psi}_{1p} + \phi_0 \quad \text{et} \quad \angle\underline{\psi}_{2n}' = \angle\underline{\psi}_{1n} - \phi_0$$

avec un déphasage $\phi_0$ adaptable, par le biais duquel il est possible de régler un couple résultant,

**15**

$k_{red}$ représentant un facteur de réduction qui est choisi en fonction de la grandeur de commande maximale disponible de la tension de rotor.

2. Procédé de compensation des oscillations harmoniques du couple du rotor sur une machine asynchrone (1) à double alimentation comprenant un rotor (1b) alimenté par le biais d'un variateur (6), dans lequel,
sur la machine asynchrone (1) à double alimentation, pour réguler le couple du rotor afin d'atténuer les moments oscillants de la double fréquence du réseau, une régulation de la tension acheminée au rotor (1b) est réalisée de la manière suivante :

a) calcul d'un vecteur de flux statorique $\underline{\psi}_1$ actuel et d'un vecteur de flux rotorique $\underline{\psi}_2$' actuel au moyen d'un observateur de flux sur la base des grandeurs de mesure actuelles de la machine ;
b) dédoublement du vecteur de flux statorique $\underline{\psi}_1$ et du vecteur de flux rotorique $\underline{\psi}_2$' à chaque fois en une composante de système direct $\underline{\psi}_{1p}$ ou $\underline{\psi}_{2p}$' et en une composante de système inverse $\underline{\psi}_{1n}$ ou $\underline{\psi}_{2n}$' ;
c2) régulation de la composante de système inverse du flux rotorique, de telle sorte que le produit vectoriel négatif de la composante de système direct du flux statorique avec la composante de système inverse du flux rotorique est égal au produit vectoriel de la composante de système inverse du flux statorique avec la composante de système direct du flux rotorique :

$$-\underline{\psi}_{1p} \times \underline{\psi}_{2n}' = \underline{\psi}_{1n} \times \underline{\psi}_{2p}'.$$

3. Procédé selon la revendication 2, **caractérisé en ce que** la régulation à l'étape c2) est réalisée de telle sorte qu'un pointeur d'espace virtuel est généré, dont la différence de valeur et de phase est éliminée au moyen de deux régulateurs PI (30, 32), la régulation présentant de préférence un terme d'action anticipative.

4. Procédé selon la revendication 3, **caractérisé en ce que** la régulation est réalisée avec une limitation du signal de commande avec laquelle il est tenu compte du signal de commande maximum respectivement encore disponible au niveau du convertisseur côté rotor du variateur.

5. Procédé selon l'une des revendications 1 à 4, **caractérisé en ce que** les grandeurs de mesure actuelles de la machine utilisées à l'étape a) sont les valeurs de mesure actuelles du courant et de la tension.

6. Procédé selon l'une des revendications 1 à 5, **caractérisé en ce que** des régulateurs à superposition additive supplémentaires sont prévus pour atténuer les harmoniques d'ordre supérieur, notamment la sixième et la douzième harmonique de la fréquence du réseau.

7. Unité de régulation d'une machine triphasée à excitation externe, notamment une machine asynchrone à double alimentation, lorsque se produisent des asymétries de réseau, la machine présentant un variateur de fréquence commandé par une unité de régulation, l'unité de régulation commandant le variateur en tenant compte d'une stratégie de régulation prédéfinie,
**caractérisée en ce que**
l'unité de régulation est configurée pour mettre en oeuvre un procédé selon l'une des revendications 1 à 6.

Fig. 1

Fig. 2

Fig. 3a

Fig. 3b

Fig. 4

Fig. 5

Fig. 6

Vorsteuerung

PI-Regler

30

Reduktionsfaktor

$S_p$

$\underline{\Psi}_{1n}$

$\underline{\Psi}_{2n}$

$\underline{U}_{2n}'$

Einphasen-
Sinussignal

PT1_Filter

v1

v2

alpha

beta

Betrag

Winkel

Betrag

Winkel

Transformation
kartesische Koordinaten
auf Polarkoordinaten

Fig. 8

Vorsteuerung

Stellsignalbegrenzung

Betrag

Winkel

Einpha-
sen-Sinussignal

Virtueller
Raumzeiger

$\underline{\Psi}_{2p}$

$\underline{\Psi}_{1n}$

soll

ist

max

min

PI-Regler mit
Begrenzung

$\underline{U}_{2n}'$

Betrag

Winkel

Einpha-
sen-Sinussignal

Virtueller
Raumzeiger

$\underline{\Psi}_{1p}$

$\underline{\Psi}_{2n}$

soll

ist

PI-Regler

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ZHOU Y et al.** Control of DFIG under Unsymmetrical Voltage Dip. *PESC,* 17. Juni 2007, 933-938
- **BREKKEN T K A et al.** Control of a Doubly Fed Induction Wind Generator Under Unbalanced Grid Voltage Conditions. *IEEE TRANSACTIONS ON ENERGY CONVERSION,* 01. Marz 2007, vol. 22 (1), 129-135

- **S.M.-ENGELHARDT ; H. WREDE ; J. KRETSCHMANN.** Leistungsregelung von Windkraftanlagen mit doppeltgespeister Asynchronmaschine bei Netzunsymmetrie. *VDI-Berichte Nr. 1963,* 2006
- **H. WREDE.** Beiträge zur Erhöhung von Versorgungssicherheit und Spannungsqualität in der Übertragung und Verteilung elektrischer Energie durch leistungselektronische Betriebsmittel. Shaker Verlag, 2004, 45ff